# EUROPEAN PATENT APPLICATION

(11) **EP 4 459 487 A1**
(43) Date of publication of application: **06.11.2024**
(21) Application number: 24172703.1
(22) Date of filing: 26.04.2024
(51) Int. Cl.: G06F 21/55, G06F 21/62, H04L 9/40

(54) **DATA LOSS PREVENTION TECHNIQUES FOR INTERFACING WITH ARTIFICIAL INTELLIGENCE TOOLS**

(30) Priority: 05.05.2023 US 202363500354 P; 28.07.2023 US 202318361344
(71) Applicant: Cisco Technology, Inc., San Jose, CA 95134-1706 (US)
(72) Inventor: SINGH, Prabhat K., San Jose, CA (US); WANG, Eric, Saratoga, CA (US); ALLENA, Surya Santosh Kumar, Milpitas, CA (US); PANDEY, Ruchika, San Diego, CA (US); WANG, Jianxin, Saratoga, CA (US)
(74) Representative: Warren, Caroline Elisabeth

(57) **Abstract**

The disclosed technology addresses the need in the art for a data loss prevention policy that is adapted to new and evolving uses of artificial intelligence tools, such as generative large language models. The present technology can use techniques such as word embeddings, or classifications using artificial intelligence tools to identify leakage of sensitive information in the context of generative large language models. The present technology can also identify and track the use of content created by artificial intelligence tools for uses within an organization.

## Description

### BACKGROUND

In today's digital era, organizations rely heavily on data for their daily operations and decision-making processes. The vast amounts of sensitive data generated, stored, and transmitted by organizations are not only valuable assets but also potential targets for cybercriminals, hackers, and malicious insiders. Consequently, the unauthorized access, leakage, or loss of this sensitive data can lead to severe financial, legal, and reputational damage for organizations. Additionally, even less malicious and accidental exposure of sensitive information can be harmful to organizations.

To address these challenges, various data loss prevention solutions have been developed and implemented. Traditional DLP solutions typically rely on identifying and classifying sensitive data based on pre-defined rules, monitoring the movement and usage of the data within the network, and applying security controls to prevent unauthorized access or transmission.

### BRIEF DESCRIPTION OF THE SEVERAL VIEWS OF THE DRAWINGS

In order to describe the manner in which the above-recited and other advantages and features of the disclosure can be obtained, a more particular description of the principles briefly described above will be rendered by reference to specific embodiments thereof which are illustrated in the appended drawings. Understanding that these drawings depict only exemplary embodiments of the disclosure and are not therefore to be considered to be limiting of its scope, the principles herein are described and explained with additional specificity and detail through the use of the accompanying drawings in which:
FIG. 1 illustrates an environment for threat management in accordance with some aspects of the present technology.
FIG. 2 illustrates an example routine for tracking the propagation of and potentially preventing the use of data received from an artificial intelligence tool such as a generative large language model in accordance with some aspects of the present technology.
FIG. 3 graphically illustrates one use case of a data loss prevention policy to content generated by an artificial intelligence tool in accordance with some aspects of the present technology.
FIG. 4 illustrates an example routine for preventing content addressed by a data loss prevention policy to an artificial intelligence tool in accordance with some aspects of the present technology.
FIG. 5A and FIG. 5B graphically illustrate the use of a data loss prevention policy to regulate what data can be used in prompts given to an artificial intelligence tool in accordance with some aspects of the present technology.
FIG. 6 shows an example of a system for implementing certain aspects of the present technology.

### DESCRIPTION OF EXAMPLE EMBODIMENTS

Various embodiments of the disclosure are discussed in detail below. While specific implementations are discussed, it should be understood that this is done for illustration purposes only. A person skilled in the relevant art will recognize that other components and configurations may be used without parting from the scope of the disclosure as defined in the claims.

### OVERVIEW

Aspects of the invention are set out in the independent claims and preferred features are set out in the dependent claims. Features of one aspect may be applied to each aspect alone or in combination with other features.

In some aspects, a method for applying a data loss prevention policy to uses of an artificial intelligence tool includes intercepting a communication between a client device and an interface to an artificial intelligence tool, determining that the communication includes content addressed by the data loss prevention policy, and preventing transmission of the content addressed by the data loss prevention policy.

In some aspects, a method includes intercepting a communication originating from an artificial intelligence tool, determining that the communication includes content addressed by a data loss prevention policy, creating an identifier for at least a portion of the communication, and storing the identifier for the at least a portion of the communication in a content tracking database.

The method may also include analyzing a first portion of code to determine whether the first portion of code includes the at least the portion of the communication.

The method may also include translating at least one pattern from the data loss prevention policy into a first embedding, translating at least a portion of the communication between the client device and the interface to the artificial intelligence tool into a second embedding, comparing the first embedding to the second embedding to determine a similarity score between the first embedding and the second embedding, and determining that the at least a portion of the communication between the client device and the interface to the artificial intelligence tool is addressed by the data loss prevention policy when the similarity score between the first embedding and the second embedding is above a threshold.

In some embodiments, the embedding is a natural language word embedding.

In some embodiments, the generative artificial intelligence tool is a generative large language model.

In some embodiments, the communication is an input into a generative artificial intelligence tool, where the generative large language model is ChatGPT.

The method may also include where the identifier for at least the portion of the communication is a first hash value derived from at least the portion of the communication, the analyzing the first portion of code includes deriving a second hash value for the first portion of code, comparing the first hash value and the second value, determining that the first portion of code includes the at least the portion of the communication when the first hash value substantially matches the second hash value.

In some embodiments, the analyzing the first portion of code includes deriving a first embedding derived from at least the portion of the communication, deriving a second embedding for the first portion of code, comparing the first embedding and the second embedding, determining that the first portion of code includes at least the portion of the communication when the similarity score between the first embedding and the second embedding is above a threshold.

The method may also include where the analyzing the portion of the code occurs prior to checking the portion of the code into a source code database.

The method may also include preventing the first portion of code from being checked into the source code database when it is determined that the first portion of code includes the at least the portion of the communication. Other technical features may be readily apparent to one skilled in the art from the following figures, descriptions, and claims.

### EXAMPLE EMBODIMENTS

Additional features and advantages of the disclosure will be set forth in the description which follows, and in part will be obvious from the description, or can be learned by practice of the herein disclosed principles. The features and advantages of the disclosure can be realized and obtained by means of the instruments and combinations particularly pointed out in the appended claims. These and other features of the disclosure will become more fully apparent from the following description and appended claims, or can be learned by the practice of the principles set forth herein.

The disclosed technology addresses the need in the art for a data loss prevention policy that is adapted to new and evolving uses of artificial intelligence tools, such, but not limited to generative large language models like CHAT GPT by OPEN AI, BERT by GOOGLE, BARD (LAMDA) by GOOGLE, TRANSFORMER by MICROSOFT, BING AI, by MICROSOFT, CODEWHISPERER by AMAZON etc.

Sharing sensitive data with these large language models risks unauthorized access, disclosure, or misuse of that data. Artificial intelligence tools like generative large language models are trained on vast amounts of data from various sources and store information as part of their learning process. While the models are designed to forget specific details quickly, there is always a possibility that sensitive information might be unintentionally retained or used in future outputs.

In some embodiments, sensitive information can include but is not limited to personally identifiable information (PII), intellectual property, financial information, LLM generated data, and healthcare records.

Additionally, consuming information from some artificial intelligence tools like generative large language models is also cause for concern. Since many artificial intelligence tools, especially generative large language models, ostensibly generate text, code, and other data from scratch, it can mislead a user into believing that the output of the generative large language model is unique, whereas, in reality, it may be derived from the intellectual property of others. Misuse of that intellectual property can submit a user or their enterprise to various risks, such as copyright misuse. Therefore, using data output from generative large language models is also risky.

Traditional data loss prevention techniques are not well adapted to the new challenges posed by the use of, ever-evolving, artificial intelligence tools. For example, current generative large language models utilize a chatbot-type interface. This interface results in a thread of prompts and responses rather than a single query or communication. Over time, it is expected that these chatbot-type interfaces might also ask questions of users to disambiguate or otherwise improve their outputs. This thread of prompts can make a user more likely to accidentally expose confidential information. As an example, imagine a thread that starts with a background discussion on a topic. Later the thread progresses and the user includes a single fact that if isolated might not be harmful. Later still, the thread progresses, and another isolated fact leaks. As separate disclosures and without context, these facts might not be important, but when connected by a thread, could result in the inadvertent disclosure of sensitive information.

Additionally, the latest generation of artificial intelligence tools can interpret and summarize code. Code can come in nearly infinite varieties and detecting the disclosure of sensitive code compared to non-sensitive code is a challenge for traditional pattern matching used by some data loss prevention services.

As introduced above, the problems surrounding data loss prevention when working with artificial intelligence tools goes beyond disclosure to the artificial intelligence tools and extends to tracking the output of these tools.

For example, if a user were to receive code generated by the artificial intelligence tool, the organization is at risk of the code being derived from other code that is subject to licensing terms. Even permissive open source licensees at least require attribution, which is not possible when the code is received from current generative large language models. Additionally, code generated by an artificial intelligence tool cannot be trusted to function well or be free from easily exploitable flaws. While the output of software code from a generative large language model can be useful in some circumstances, its use in a business function should be carefully scrutinized.

Accordingly, the present technology provides new data loss prevention policies that are adapted for uses of artificial intelligence tools.

Further, the present technology can use techniques such as word embeddings, or classifications using artificial intelligence tools, to identify leakage of sensitive information in the context of generative large language models. For example, by using an embedding to represent some types of sensitive data, especially data that can occur in variable formats, strings, or expressions, the present invention is able to provide more robust detection of variants of sensitive data. In another example, a generative large language model can itself be used to track a conversation or thread to identify an evolving leakage of sensitive information.

Further still, the present technology can identify and track the use of content created by artificial intelligence tools for uses within an organization. In some embodiments, these techniques can also take advantage of word embeddings, or classifications using artificial intelligence tools, to identify evolutions of the outputs from the artificial intelligence tools. For example, a user might receive code generated by a generative large language model and might attempt to make minor adjustments to the code to avoid a policy that prohibits use of code from a generative large language model from being used in a shipping product. The present technology can identify such adaptations of code to enforce data loss prevention policies.

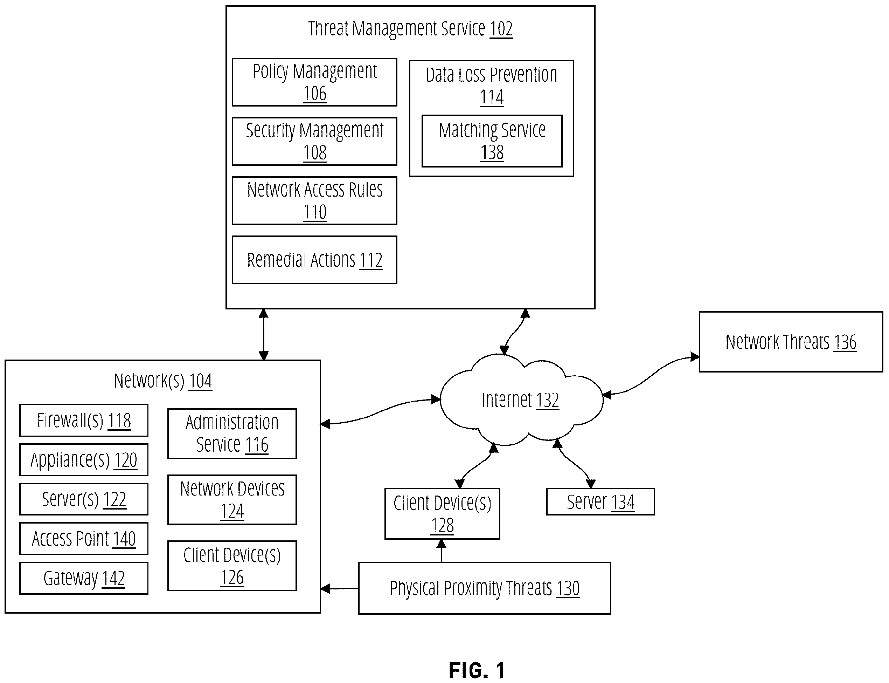

FIG. 1 illustrates an environment for threat management. Specifically, FIG. 1 depicts a block diagram of a threat management service 102 providing protection to one or more enterprises, networks, locations, users, businesses, etc. against a variety of threats. The threat management service 102 may be used to protect users, devices, a network, and enterprises from data loss through data loss prevention techniques. The threat management service 102 may be used to protect devices (e.g., IoT devices, appliances, servers, client devices, or other devices) and software from computer-generated and human-generated threats. For example, an entity may institute and enforce one or more policies that control or prevents certain network users from accessing certain types of applications, devices, or resources. Policies may be created, deployed and managed, for example, through the threat management service 102, which may update and monitor network devices, users, and assets accordingly.

The threat of malware or other compromises may be present at various points within a network 104 such as client devices 126, server 122, gateways 142, IoT devices, appliances 120, firewalls 118, software, etc. In addition to controlling or stopping malicious code, the threat management service 102 may provide policy management to control devices, applications, or user accounts that might otherwise undermine the productivity and network performance within the network 104.

The threat management service 102 may provide protection to network 104 from inadvertent data loss or data leakage, computer-based malware, including viruses, spyware, adware, trojans, intrusion, spam, policy abuse, advanced persistent threats, uncontrolled access, and the like. In general, the network 104 may be any networked computer-based infrastructure or the like managed by the threat management service 102, such as an organization, association, institution, or the like, or a cloud-based service. For example, the network 104 may be a corporate, commercial, educational, governmental, or other network, and may include multiple networks, computing resources, and other facilities, may be distributed among more than one geographical location, and may include an administration service 116, a firewall 118, an appliance 120, servers 122, network devices 124, or client devices 126.

The threat management service 102 may include computers, software, or other computing service supporting a plurality of functions, such as one or more of a security management service 108, a policy management service 106, a network access rules service 110, a remedial action service 112, a data loss prevention service 114, and the like. The threat management service 102 can be located in a cloud datacenter, or on premises servers or appliances, or distributed across a combination of these.

In some embodiments, the threat protection provided by the threat management service 102 may extend beyond the network boundaries of the network 104 to include client device 128 that has moved into network connectivity not directly associated with or controlled by the network 104. Threats to client facilities may come from a variety of sources, such as from network threats 136, physical proximity threats 130, and the like. Client device 128 may be protected from threats even when the client device 128 is not directly connected to or in association with the network 104, such as when a client device 128 moves in and out of the network 104, for example when interfacing with an unprotected server 134 through the internet 132.

The threat management service 102 may use or may be included in an integrated system approach to provide the network 104 with protection from a plurality of threats to device resources in a plurality of locations and network configurations. The threat management service 102 may also or instead be deployed as a stand-alone solution for an enterprise. For example, some or all of the threat management service 102 components may be integrated into a server or servers on premises or at a remote location, for example in a cloud computing service. For example, some or all of the threat management service 102 components may be integrated into a firewall 118, appliance 120, server 122, gateway 142, or access point 140 within or at the border of the network 104. In some embodiments, the threat management service 102 may be integrated into a product, such as a third-party product (e.g., through an application programming interface), which may be deployed on endpoints, on remote servers, on internal servers or gateways for a network, or some combination of these. In some embodiments, the threat management service 102 can be a secure access service edge (SASE) architecture. A product that is an example of a commercial threat management service 102 can be CISCO'S UMBRELLA.

The data loss prevention service 114 may include a plurality of elements to provide protection from data-related vulnerabilities. Most commonly, data loss prevention is concerned with preventing the unauthorized leaking of sensitive information, including, but not limited to such as personal identifiable information (PII), intellectual property, financial information, LLM generated data and healthcare records. Data loss prevention service 114 can also be applied to track the use of liability-inducing data within network 104. Data loss prevention can include technologies for identifying and classifying sensitive data, continuously tracking and analyzing the movement and usage of sensitive data, implementing security measures to prevent unauthorized access, sharing, or transmission of sensitive data, establishing and enforcing data handling policies, and providing tools and processes to detect, investigate, and respond to potential data loss incidents.

Additionally, the data loss prevention service 114 can inspect data a rest or data in motion. For example, data at rest includes data stored at a network location, while data in motion includes data moving to or from a service, inside or outside of the network. For example, the data loss prevention service 114 can check files leaving the network for data loss prevention against data loss prevention policies configured by the policy management service 106.

The data loss prevention service 114 can utilize a matching service 138 to identify data subject to a data loss prevention policy. In some embodiments, the matching service 138 can utilize pattern matching and regular expression (RegEx) matching to identify data that is potentially sensitive data. In some embodiments, the matching service 138 can utilize embeddings that can characterize data in the data loss prevention policy in a way that encompasses semantic meaning and contextual uses of the data identified in the data loss prevention policy, whereby sensitive data that has a similar embedding to data in the data loss prevention policy can be flagged as potentially sensitive. In some embodiments, the matching service 138 can utilize artificial intelligence or machine learning to intelligence to analyze data and identify the data as potentially sensitive.

The security management service 108 may include a plurality of elements that provide protection from malware to device resources of the network 104 in a variety of ways, including endpoint security and control, email security and control, web security and control, reputation-based filtering, control of unauthorized users, control of guest and non-compliant computers, and the like. The security management service 108 may provide protection to one or more device resources of the network 104. The security management service 108 may have the ability to scan client service files for malicious code, remove or quarantine certain applications and files, prevent certain actions, perform remedial actions and perform other security measures.

In some embodiments, the security management service 108 may provide for network access control, which may provide control over network connections. In addition, network access control may control access to virtual private networks (VPN) that provide communications networks tunneled through other networks. The security management service 108 may provide host intrusion prevention through behavioral-based analysis of code, which may guard against known or unknown threats by analyzing behavior before or while code executes. Further, or instead, the security management service 108 may provide reputation filtering, which may target or identify sources of code.

The security management service 108 may be used to scan an outgoing file and verify that the outgoing file is permitted to be transmitted per the rules and policies of the network 104. By checking outgoing files, the security management service 108 may be able to discover malicious code infected files that were not detected as incoming files.

The policy management service 106 of the threat management service 102 may be configured to take actions, such as to block applications, users, communications, devices, and so on based on determinations made. The policy management service 106 may employ a set of rules or policies that determine network 104 access permissions for one or more of the client devices 126. In some embodiments, a policy database may include a block list, a black list, an allowed list, a white list, or the like, or combinations of the foregoing, that may provide a list of resources internal or external to the network 104 that may or may not be accessed by the client devices 126. The policy management service 106 may also or instead include rule-based filtering of access requests or resource requests, or other suitable techniques for controlling access to resources consistent with a corresponding policy.

The threat management service 102 may provide controlled access to the network 104. For example, the network access rules service 110 may be responsible for determining if an application running on a given one or more of the client devices 126 should be granted access to a requested network resource. When network access for a client service is denied, the network access rules service 110 may send an information file to the client service (e.g., a command or command file that the remedial action service 112 may access and take action upon). The network access rules service 110 may include one or more databases including one or more of a block list, a black list, an allowed list, a white list, a reputation list, an unacceptable network resource database, an acceptable network resource database, a network resource reputation database, or the like. The network access rules service 110 may incorporate rule evaluation. Rule evaluation may, for example, parse network access requests and apply the parsed information to network access rules. The network access rule service 106 may also or instead provide updated rules and policies to the network 104.

When a threat or policy violation is detected by the threat management service 102, the threat management service 102 may perform or initiate remedial action through the remedial action service 112. Remedial action may take a variety of forms, such as terminating or modifying an ongoing process or interaction, issuing an alert, sending a warning (e.g., to a client device 126 or to the administration service 116) of an ongoing process or interaction, executing a program or application to remediate against a threat or violation, record interactions for subsequent evaluation, and so forth. The remedial action may include one or more of blocking some or all requests to a network location or resource, performing a malicious code scan on a device or application, performing a malicious code scan on one or more of the client devices 126, quarantining a related application (or files, processes or the like), terminating the application or device, isolating the application or device, moving a process or application code to a sandbox for evaluation, isolating one or more of the client devices 126 to a location or status within the network that restricts network access, blocking a network access port from one or more of the client device 126, reporting the application to the administration service 116, or the like, as well as any combination of the foregoing.

The threat management service 102 may provide threat protection across the network 104 to devices such as the client devices 126, the servers 122, the administration service 116, the firewall 118, the access point 140, the gateway 142, one or more of the network devices 124 (e.g., hubs and routers), one or more of the appliances 120 (e.g., a threat management appliance such as a SASE appliance), any number of desktop or mobile users, and the like in coordination with an endpoint computer security service. The endpoint computer security service may be an application locally loaded onto any device or computer support component on network 104, either for local security functions or for management by the threat management service 102 or other remote resource, or any combination of these. The network 104 may include a plurality of client service computing platforms (e.g., the client devices 126) on which the endpoint computer security service is installed. A client service computing platform may be a computer system that is able to access a service on another computer, such as one or more of the servers 134, via a network. The endpoint computer security service 108 may, in corresponding fashion, provide security in any suitable context such as among a plurality of networked applications, for a client service connecting to an application server service, for a web browser client service connecting to a web server service, for an e-mail client service retrieving e-mail from an internet 132 service provider's mail storage servers or web site, and the like, as well as any variations or combinations of the foregoing. As used herein, any one or more of the application server service, the web server service, and the mail storage servers should be understood to include one or more of the servers 134.

The network 104 may include one or more of the servers 122, such as application servers, communications servers, file servers, database servers, proxy servers, mail servers, fax servers, game servers, web servers, and the like. In some embodiments, the threat management service 102 may provide threat protection to servers 122 within the network 104 as load conditions and application changes are made.

The client devices 126 may be protected from threats from within the network 104 using a local or personal firewall, which may be a hardware firewall, software firewall, or a combination thereof, that controls network traffic to and from a client. The local firewall may permit or deny communications based on a security policy.

The interface between the threat management service 102 and the network 104 to embedded endpoint computer security facilities, may include a set of tools that may be the same or different for various implementations and may allow network administrators to implement custom controls. In some embodiments, these controls may include both automatic actions and managed actions. The administration service 116 may configure policy rules that determine interactions. The administration service 116 may also establish license management, which in turn may further determine interactions associated with licensed applications. In embodiments, interactions between the threat management service 102 and the network 104 may provide threat protection to the network 104 by managing the flow of network data into and out of the network 104 through automatic actions that may be configured by the threat management service 102 for example by action or configuration of the administration service 116.

The client devices 126 within the network 104 may be connected to the network 104 by way of the network devices 124, which may be wired devices or wireless devices such as access points 140. The client devices 126 may be mobile wireless devices and, because of their ability to connect to a wireless network access point 140, may connect to the internet 132 outside the physical boundary of the network 104, and therefore outside the threat-protected environment of the network 104. Such mobile wireless facilities, if not for the presence of a locally-installed endpoint computer security service, may be exposed to a malware attack or perform actions counter to policies of the network 104. Thus, the endpoint computer security service may provide local protection against various threats and policy violations. The threat management service 102 may also or instead be configured to protect the out-of-enterprise service mobile client service (e.g., the client devices 128) through interactions over the internet 132 with the locally-installed endpoint computer security service. Thus, mobile client facilities that are components of the network 104 but temporarily outside connectivity with the network 104 may be provided with the same or similar threat protection and policy control provided to the client devices 126 inside the network 104.

Interactions between the threat management service 102 and the components of the network 104, including mobile client service extensions of the network 104, may ultimately be connected through the internet 132 or any other network or combination of networks. Security-related or policy-related downloads and upgrades to the network 104 may be passed from the threat management service 102 through to components of the network 104 equipped with the endpoint computer security service 108. In turn, the endpoint computer security facilities 108 of the enterprise service 102 may upload policy and access requests back across the internet 132 and through to the threat management service 102. The internet 132, however, is also the path through which threats may be transmitted from their source, and one or more of the endpoint computer security facilities may be configured to protect a device outside the network 104 through locally-deployed protective measures and through suitable interactions with the threat management service 102.

Thus, if the mobile client service were to attempt to connect to an unprotected connection point that is not a part of the network 104, the mobile client service, such as one or more of the client devices 128, may be required to request network interactions through the threat management service 102, where contacting the threat management service 102 may be performed prior to any other network action. In embodiments, the endpoint computer security service of the client device 128 may manage actions in unprotected network environments such as when the client service (e.g., the client device 128) is in a secondary location, where the endpoint computer security service may dictate which applications, actions, resources, users, etc. are allowed, blocked, modified, or the like.

Some threats do not come directly from the internet 132. For example, one or more physical proximity threats 130 may be deployed on a client device 128 while that device is connected to an unprotected network connection outside the network 104 and, when the client device 128 is subsequently connected to network 104 as or more of the client devices 126 on the network 104, the device can deploy malware or otherwise pose a threat. In embodiments, the endpoint computer security service may protect the network 104 against these types of physical proximity threats 130, for instance, through scanning any device prior to allowing data transfers, through security validation certificates, through establishing a safe zone within the network 104 to receive data for evaluation, and the like.

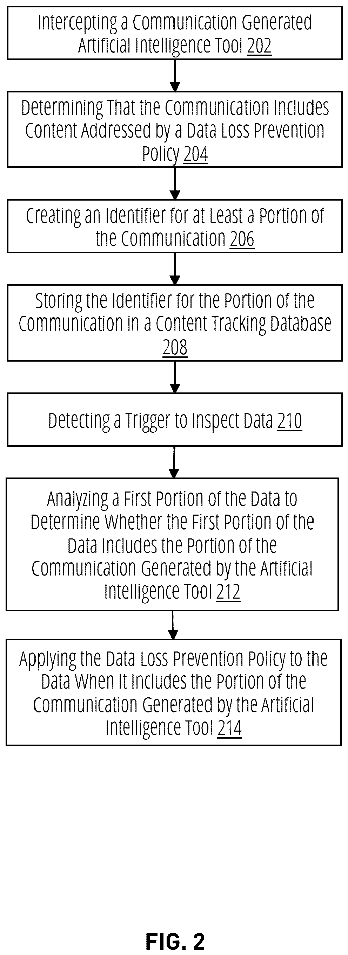

FIG. 2 illustrates an example routine for tracking the propagation of and potentially preventing the use of data received from an artificial intelligence tool such as a generative large language model. Although the example routine depicts a particular sequence of operations, the sequence may be altered without departing from the scope of the present disclosure. For example, some of the operations depicted may be performed in parallel or in a different sequence that does not materially affect the function of the routine. In other examples, different components of an example device or system that implements the routine may perform functions at substantially the same time or in a specific sequence.

According to some examples, the method includes intercepting a communication between a client device and an interface to an artificial intelligence tool at block 202. For example, the data loss prevention service 114 illustrated in FIG. 1 may intercept a communication generated by an artificial intelligence tool.

Generative large language models are adept at creating writings, software code, images, videos, audio, etc. Even when the output of such tools was created using prompts that did not include confidential or privacy related information, the content received from the generative large language model can pose risks to the organization and should be considered sensitive data. For example, the content can be written content, an image, music, etc. generated by a generative large language model. The organization can be at risk from using this information in organization publications since this information could include copyrighted portions. Since artificial intelligence tools are trained on copyrighted data, data that references trademarks, or might otherwise include content that is the intellectual property of others, an enterprise cannot be confident that the output of the artificial intelligence tool is permissible for the organization to use. In another example, if a user were to receive code generated by the artificial intelligence tool, the organization is at risk of the code being derived from other code that is subject to licensing terms. Even permissive open source licensees at least require attribution, which is not possible when the code is received from current generative large language models. Additionally, code generated by an artificial intelligence tool cannot be trusted to function well or be free from easily exploitable flaws. While the output of software code from a generative large language model can be useful in some circumstances, its use in a business function should be carefully scrutinized. Therefore, the present technology provides for tracking the use or occurrence of content received from the generative large language model in documents and products within the enterprise.

According to some examples, the method includes determining that the communication includes content addressed by a data loss prevention policy at block 204. For example, the data loss prevention service 114 illustrated in FIG. 1 may determine that the communication includes content addressed by a data loss prevention policy. One type of information that is often relevant to a data loss prevention policy includes sensitive information. In some embodiments, sensitive information includes, but is not limited personally identifiable information (PII), intellectual property, financial information, data generated from some artificial intelligence tools, and healthcare records. In the context of the present technology, the content generated by generative large language models is a class of artificial intelligence tools that is considered sensitive data.

For example, the communication can include data generated by an artificial intelligence tool. In another example, the data includes software code that the organization would not want to be used or included in the company's code base.

The data loss prevention service 114 can detect communication through intercepting communications between a user or any other entity on the network 104, or that is part of the enterprise and the generative large language model (or other artificial intelligence tool) by a data loss prevention policy proxy. This includes communications being received through interacting with an API that may itself interact with the artificial intelligence tool. For example, all communications to and from the network 104 can pass through a firewall 118, gateway 142, or virtualized service, configured as a proxy to receive and evaluate all data, including data received from an artificial intelligence tool, such as a generative large language model. The proxy can be an extension of the data loss prevention service 114 and evaluate this data for compliance with the data loss prevention policy - which in this example pertains to tracking the propagation of the output of the generative large language model for use or occurrence in documents and products within the enterprise.

According to some examples, the method includes creating an identifier for at least a portion of the communication at block 206. For example, the data loss prevention service 114 illustrated in FIG. 1 may create an identifier for at least a portion of the communication. In order to track the propagation of the output of the generative large language model for use or occurrence in documents and products within the enterprise, the data loss prevention service 114 can create an identifier for at least a portion of the output communicated from the generative large language model. In some examples, the data loss prevention service 114 can create several identifiers for the output of the generative large language model. For example a collection of a5code can be broken into smaller chunks where at least some have their own identifiers, music can be broken into chords, etc.

In some embodiments, the identifier can be a hash value derived from portions, or at least the portion of the communication. A hash value is a number of a fixed length that is generated from a string of text by a formula. It uniquely identifies data, such as a file, folder, email, or attachment. It is extremely unlikely that two different data will have the same hash value.

In some embodiments, the identifier can be an embedding. Embeddings can be used to represent at least the portion of the communication included in a way that can account for the form of the data, the semantic meaning of the data, and how the data can relate to other data (e.g., data that often occurs together, such as phrases in a sentence or paragraph). When embeddings are used, the embeddings can reflect more information than just the arrangement of data. The embeddings can encode information about the semantic meaning of data, function of data, or relationships between data.

Embeddings can be used to represent the sensitive data included in the data loss prevention policy in a way that can account for the form of the data, the semantic meaning of the data, and how the data can relate to other data (e.g., data that often occurs together, such as phrases in a sentence or paragraph). Word embeddings refer to techniques used to create embeddings for words, phrases, and sentences, that account for the text of the word or phrase, the meaning of the word or phrase, and how the word or phrase is used in language. These techniques can be applied to any data that occurs in context with other data, or in sequences. Therefore, these techniques have been applied to music, and software code, among other types of data.

The use of an embedding is often to compare one embedding to another to determine how similar embeddings are. This can be performed by analyzing the embeddings as vectors and calculating the proximity of one vector to another in an embedding space including the vectors.

The embeddings can be created by trained machine learning algorithms provided by the matching service 138. In some embodiments, the embeddings can be created by a large language model. However, in order to achieve the aims of the present technology, the large language model doing the embeddings needs to access sensitive data, so the large language model used to create the embeddings can be under the control of the enterprise and provided by the matching service 138.

According to some examples, the method includes storing the identifier for the at least a portion of the communication in a content tracking database at block 208. For example, the data loss prevention service 114 illustrated in FIG. 1 may store the identifier for the at least a portion of the communication in a content tracking database.

Once the identifier is stored, it can be used to look for at least the portion of the communication in documents and products of the organization in which a data loss prevention policy prohibits the use of content from the generative large language model from being used. The data loss prevention policy can be used to protect and inspect data at rest and data in motion in the enterprise. Data can be inspected where it is stored, inspected prior to access, after access, during transfer, when it is stored, etc. In some embodiments, the data loss prevention policy may treat the data differently depending on the use of the data. For example, content generated by an artificial intelligence tool may be allowed to be saved to some locations in a network, but cannot be included in data saved to any repository where the data might be published such as included in a blog or a source code database.

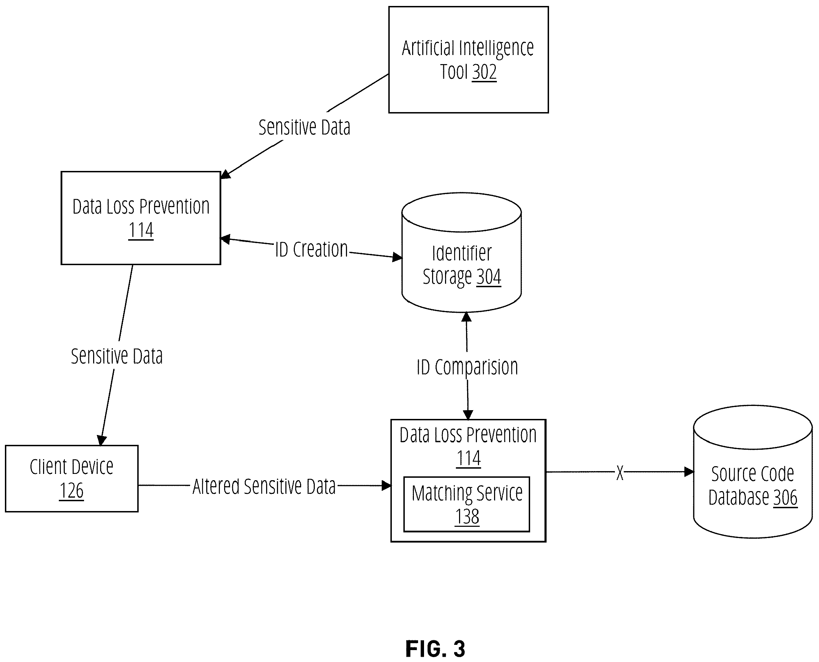

According to some examples, the method includes detecting a trigger to inspect data at block 210. For example, the data loss prevention service 114 illustrated in FIG. 1 may detect a trigger to inspect data. The trigger could be any event that triggers an inspection. For example, the trigger can be a request to access data, store data, move data, or other trigger. Data can be inspected where it is stored, inspected prior to access, after access, during transfer, when it is stored, etc. As illustrated in FIG. 3, the trigger can be to check the source code into a source code database.

According to some examples, the method includes analyzing a first portion of the data to determine whether the first portion of the data includes the at least the portion of the communication generated by the artificial intelligence tool at block 212. For example, the data loss prevention service 114 illustrated in FIG. 1 may analyze a first portion of the data to determine whether the first portion of the data includes the at least the portion of the communication. While reference is made to analyzing a first portion of data, it will be understood that any portion or portions of the data can be analyzed.

There can be multiple methods for analyzing the first portion of the data to determine if it contains content derived from the artificial intelligence tool, such as a generative large language model like ChatGPT. For example, the identifier for the at least the at least the portion of the communication can be a first hash value derived from at least the portion of the communication. In such examples, the matching service 138 can derive a second hash value for the first portion of the data, compare the first hash value and the second value, and determine that the first portion of the data includes the at least the portion of the communication when the first hash value substantially matches the second hash value.

In examples where the identifier is a first embedding derived from at least the portion of the communication, the example can derive a second embedding for first portion of the data. The data loss prevention service 114 can compare the first embedding and the second embedding, and determine that the first portion of the data includes the at least the portion of the communication when the similarity score between the first embedding and the second embedding is above a threshold. One benefit of using embeddings is that the content from the artificial intelligence tool can be modified and the first embedding and the second embedding can still be similar enough to be a match.

According to some examples, the method includes applying the data loss prevention policy to the data when it includes the portion of the communication generated by the artificial intelligence tool at block 214. For example, the data loss prevention service 114 illustrated in FIG. 1 may apply the data loss prevention policy to the data when it includes the portion of the communication generated by the artificial intelligence tool. In this way, the propagation and use of content from a generative large language model can be prevented from being used in documents or code that the data loss prevention policy prohibits.

FIG. 3 graphically illustrates one use case of a data loss prevention policy to content generated by an artificial intelligence tool. While FIG. 3 pertains to a code check-in use case, the present technology applies to any use case for receiving content from an artificial intelligence tool and ensuring that the use of such content within an enterprise complies with the data loss prevention policy.

As illustrated in FIG. 3 content is generated by an artificial intelligence tool. In FIG. 3, any content generated by the artificial intelligence tool is considered sensitive data, and in this embodiment, the content is software code, and the artificial intelligence tool is a generative large language model.

As the sensitive data enters the network, the data loss prevention service 114 can intercept the data, and create an identifier that can be used to track the sensitive data as it moves throughout the enterprise. In this example, the ID can be natural language embedding created based on the sensitive data.

Assuming the data loss prevention policy permits the sensitive data to be received by the client device 126, the client device 126 receives the sensitive data (code generated by the generative large language model).

While at the client device 126, a user can modify the code, or incorporate the code into a larger project. This may be enough for the data loss prevention service 114 to inspect the code, if this is a trigger that the data loss prevention service 114 is configured for. However, in FIG. 3, the trigger is that the client device 126 attempts to check the code into source code database 306.

The data loss prevention service 114 can create a second identifier, another embedding, and the matching service 138 can compare the embedding for the code to be checked into the source code database 306 with other embeddings in the identifier storage 304. When there is sufficient similarity between the embedding for the code to be checked in and the embedding in the identifier storage 304, the data loss prevention policy can prevent the code from being checked in.

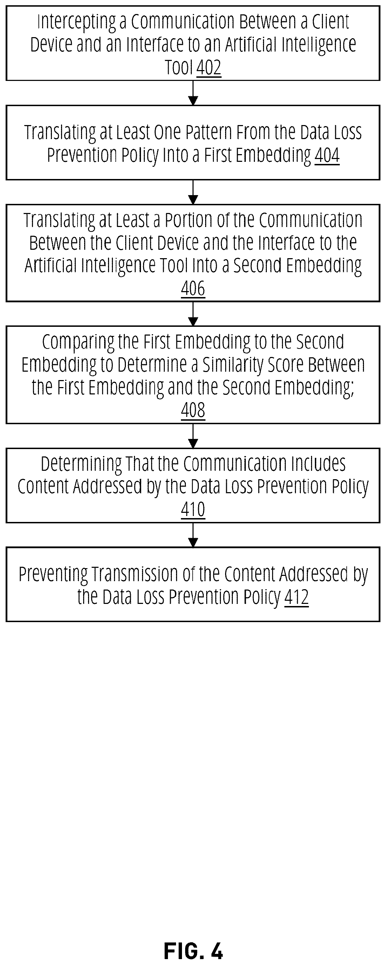

FIG. 4 illustrates an example routine for preventing content addressed by a data loss prevention policy to an artificial intelligence tool. Although the example routine depicts a particular sequence of operations, the sequence may be altered without departing from the scope of the present disclosure. For example, some of the operations depicted may be performed in parallel or in a different sequence that does not materially affect the function of the routine. In other examples, different components of an example device or system that implements the routine may perform functions at substantially the same time or in a specific sequence.

As addressed above, the present technology addresses the sharing of sensitive data with artificial intelligence tools, and in particular, generative large language models. Artificial intelligence tools like CHAT GPT are trained on vast amounts of data from various sources and store information as part of their learning process. While the models are designed to forget specific details quickly, there is always a possibility that sensitive information might be unintentionally retained or used in future outputs.

While there are risks to using artificial intelligence tools, such tools are also useful. Many organizations desire to allow users of their networks to make use of such artificial intelligence tools, but also want to safeguard their sensitive information. Therefore the present technology includes data loss prevention policies that are adapted for uses of artificial intelligence tools.

In some embodiments, a distinction is made between an artificial intelligence tool that is permitted to receive sensitive information and an artificial intelligence tool that is not permitted to receive the sensitive information. In some embodiments, the organization will have their own artificial intelligence tools to which sensitive data can be provided. The present technology can be applied to prevent sensitive data from being provided to artificial intelligence tools to which sensitive data should not be provided. In a simple sense, an artificial intelligence tool that is outside of the organization, or at least one in which the organization does not have a suitable data policy in place, is one in which sensitive data should not be provided. In practice, the distinction of an internal artificial intelligence tool and an external artificial intelligence tool is not sufficient. There can be internal artificial intelligence tools that some users should not provide sensitive data to, and there might be external artificial intelligence tools to which sharing of sensitive data is permitted. These distinctions are covered by a data loss prevention policy and or an access policy.

According to some examples, the method includes intercepting a communication between a client device and an interface to an artificial intelligence tool at block 402. For example, the data loss prevention service 114 illustrated in FIG. 1 may intercept a communication between a client device and an interface to an artificial intelligence tool. The intercepting of the communication between the client device and the interface to an artificial intelligence tool is performed by a data loss prevention policy proxy. For example, all communications on network 104 can pass through a firewall 118, gateway 142, or appliance 120 configured as a proxy to receive and evaluate all data, including data provided into a chat window of a webpage. The proxy can be an extension of the data loss prevention service 114 and evaluate this data for compliance with the data loss prevention policy.

The artificial intelligence tool can be any artificial intelligence tool, but currently, the most concerning type of artificial intelligence tool from a data loss prevention perspective is a generative artificial intelligence tool, or a generative large language model such as ChatGPT. These generative large language models are trained on large amounts of data, and inputs into the tools can be used as training data. Therefore, any sensitive data that is used to train the generative large language model could show up later in text, code, images, audio, or video created using the generative large language model.

According to some examples, the method utilizes pattern matching or hash code matching to identify data covered by the data loss prevention policy. For example, the matching service 138 illustrated in FIG. 1 can recognize patterns that indicate that a social security number or other personally identifiable information is included in the data. In another example, the matching service 138 can use regular expressions (RegEx) to identify some software code. In another example, the matching service 138 can create hash values from portions of software code in the enterprise's code base and can search the data being provided to the artificial intelligence tool for segments of code that match or somewhat match the hash value.

However, some data might be transformed by the user in one or more ways that makes pattern matching insufficient. Especially in instances when code is provided to the artificial intelligence tool, it can be hard to identify code that performs the same functions but has been modified to avoid detection by simpler techniques utilized by the matching service 138. To address these situations, according to some examples, the method includes translating at least one pattern from the data loss prevention policy into a first embedding at block 404. For example, the matching service 138 illustrated in FIG. 1 may translate at least one pattern from the data loss prevention policy into a first embedding. In some examples, the embedding is a natural language word embedding.

Embeddings can be used to represent the sensitive data included in the data loss prevention policy in a way that can account for the form of the data, the semantic meaning of the data, and how the data can relate to other data (e.g., data that often occurs together, such as phrases in a sentence or paragraph). Word embeddings refer to techniques used to create embeddings for words, phrases, and sentences, that account for the text of the word or phrase, the meaning of the word or phrase, and how the word or phrase is used in language. These techniques can be applied to any data that occurs in context with other data, or in sequences. Therefore, these techniques have been applied to music, and software code, among other types of data.

The use of an embedding is often to compare one embedding to another to determine how similar embeddings are. This can be performed by analyzing the embeddings as vectors and calculating the proximity of one vector to another in an embedding space including the vectors.

The embeddings can be created by trained machine learning algorithms provided by the matching service 138. In some embodiments, the embeddings can be created by a large language model. However, in order to achieve the aims of the present technology, the large language model doing the embeddings needs to access sensitive data, so the large language model used to create the embeddings can be under the control of the enterprise and provided by the matching service 138.

According to some examples, the method includes translating at least a portion of the communication between the client device and the interface to the artificial intelligence tool into a second embedding at block 406. For example, the matching service 138 illustrated in FIG. 1 may translate at least a portion of the communication between the client device and the interface to the artificial intelligence tool into a second embedding. The embedding is a natural language word embedding.

According to some examples, the method includes comparing the first embedding to the second embedding to determine a similarity score between the first embedding and the second embedding at block 408. For example, the matching service 138 illustrated in FIG. 1 may compare the first embedding to the second embedding to determine a similarity score between the first embedding and the second embedding.

According to some examples, the method includes determining that the communication includes content addressed by the data loss prevention policy at block 410. For example, the data loss prevention service 114 illustrated in FIG. 1 may determine that the communication includes content addressed by the data loss prevention policy either through pattern matching or through a determination that the embedding of the data being provided to the external artificial intelligence tool and the embeddings representing data covered by the data loss prevention policy are similar enough to consider the communication as being addressed by the data loss prevention policy.

According to some examples, the method includes preventing transmission of the content addressed by the data loss prevention policy at block 412. For example, the remedial action service 112 illustrated in FIG. 1 may prevent transmission of the content addressed by the data loss prevention policy. Determining that the at least a portion of the communication between the client device and the interface to the artificial intelligence tool is addressed by the data loss prevention policy when the similarity score between the first embedding and the second embedding is above a threshold. The data loss prevention policy prevents submission of confidential content addressed by the data loss prevention policy from being submitted in an instruction or query to the artificial intelligence tool.

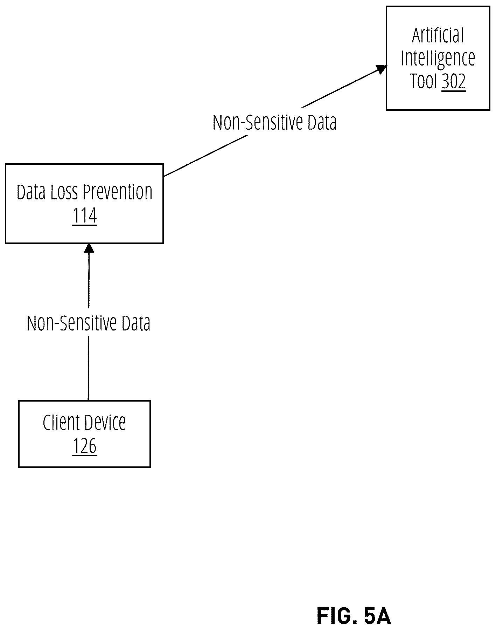

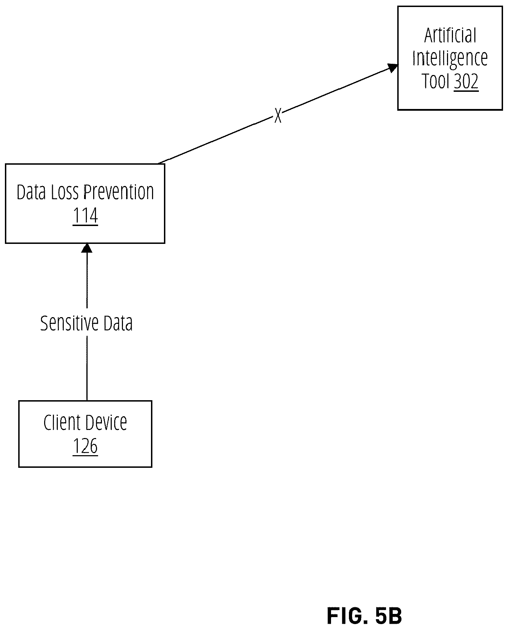

FIG. 5A and FIG. 5B graphically illustrate the use of a data loss prevention policy to regulate what data can be used in prompts given to an artificial intelligence tool.

Client device 126 can attempt to interact with an artificial intelligence tool 302. Client device 126 can interact with the artificial intelligence tool 302 directly, or through an intermediary, like an API.

The data loss prevention service 114 can intercept communications from client device 126 going to artificial intelligence tool 302 through a proxy provided by the data loss prevention service 114.

The data loss prevention service 114 can inspect the communications for sensitive data. In this case, sensitive data is any information that should not be shared outside of the organization. In FIG. 5A, the communications include non-sensitive data, and thus the communications are permitted to be sent to the artificial intelligence tool 302. In FIG. 5B, the communications include sensitive data, and thus the communications are not permitted to be sent to the artificial intelligence tool 302.

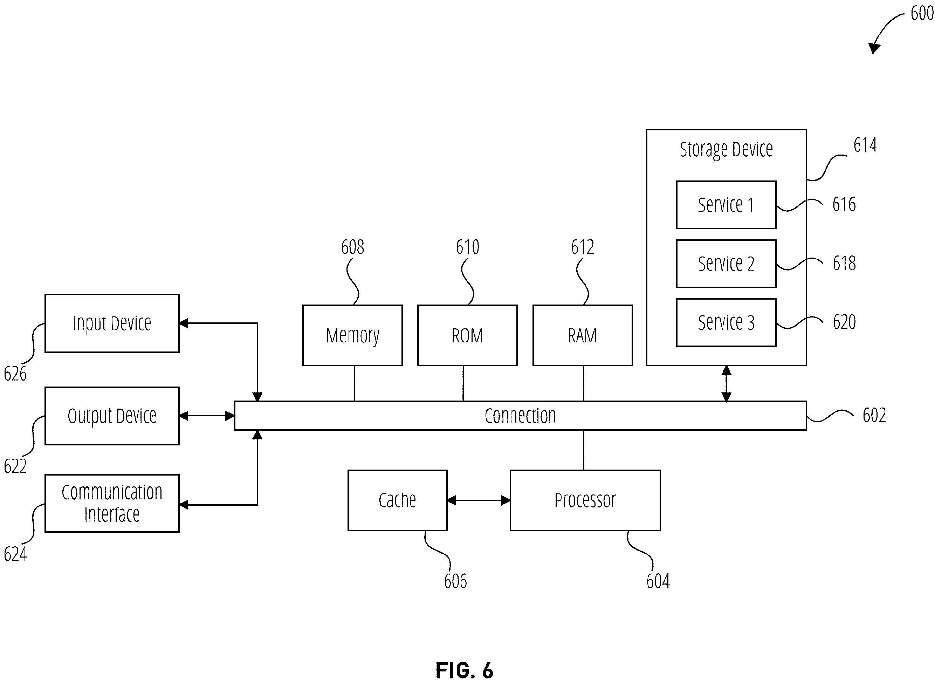

FIG. 6 shows an example of computing system 600, which can be for example any computing device making up the threat management service 102 or data loss prevention service 114, or any component thereof in which the components of the system are in communication with each other using connection 602. Connection 602 can be a physical connection via a bus, or a direct connection into processor 604, such as in a chipset architecture. Connection 602 can also be a virtual connection, networked connection, or logical connection.

In some embodiments, computing system 600 is a distributed system in which the functions described in this disclosure can be distributed within a datacenter, multiple data centers, a peer network, etc. In some embodiments, one or more of the described system components represents many such components each performing some or all of the function for which the component is described. In some embodiments, the components can be physical or virtual devices.

Example computing system 600 includes at least one processing unit (CPU or processor) 604 and connection 602 that couples various system components including system memory 608, such as read-only memory (ROM) 610 and random access memory (RAM) 612 to processor 604. Computing system 600 can include a cache of high-speed memory 606 connected directly with, in close proximity to, or integrated as part of processor 604.

Processor 604 can include any general purpose processor and a hardware service or software service, such as services 616, 618, and 620 stored in storage device 614, configured to control processor 604 as well as a special-purpose processor where software instructions are incorporated into the actual processor design. Processor 604 may essentially be a completely self-contained computing system, containing multiple cores or processors, a bus, memory controller, cache, etc. A multi-core processor may be symmetric or asymmetric.

To enable user interaction, computing system 600 includes an input device 626, which can represent any number of input mechanisms, such as a microphone for speech, a touch-sensitive screen for gesture or graphical input, keyboard, mouse, motion input, speech, etc. Computing system 600 can also include output device 622, which can be one or more of a number of output mechanisms known to those of skill in the art. In some instances, multimodal systems can enable a user to provide multiple types of input/output to communicate with computing system 600. Computing system 600 can include communication interface 624, which can generally govern and manage the user input and system output. There is no restriction on operating on any particular hardware arrangement, and therefore the basic features here may easily be substituted for improved hardware or firmware arrangements as they are developed.

Storage device 614 can be a non-volatile memory device and can be a hard disk or other types of computer readable media which can store data that are accessible by a computer, such as magnetic cassettes, flash memory cards, solid state memory devices, digital versatile disks, cartridges, random access memories (RAMs), read-only memory (ROM), and/or some combination of these devices.

The storage device 614 can include software services, servers, services, etc., that when the code that defines such software is executed by the processor 604, it causes the system to perform a function. In some embodiments, a hardware service that performs a particular function can include the software component stored in a computer-readable medium in connection with the necessary hardware components, such as processor 604, connection 602, output device 622, etc., to carry out the function.

In summary, the disclosed technology addresses the need in the art for a data loss prevention policy that is adapted to new and evolving uses of artificial intelligence tools, such as generative large language models. The present technology can use techniques such as word embeddings, or classifications using artificial intelligence tools to identify leakage of sensitive information in the context of generative large language models. The present technology can also identify and track the use of content created by artificial intelligence tools for uses within an organization.

For clarity of explanation, in some instances the present technology may be presented as including individual functional blocks including functional blocks comprising devices, device components, steps or routines in a method embodied in software, or combinations of hardware and software.

Any of the steps, operations, functions, or processes described herein may be performed or implemented by a combination of hardware and software services or services, alone or in combination with other devices. In some embodiments, a service can be software that resides in memory of a client device and/or one or more servers of a content management system and perform one or more functions when a processor executes the software associated with the service. In some embodiments, a service is a program, or a collection of programs that carry out a specific function. In some embodiments, a service can be considered a server. The memory can be a non-transitory computer-readable medium.

In some embodiments the computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

Methods according to the above-described examples can be implemented using computer-executable instructions that are stored or otherwise available from computer readable media. Such instructions can comprise, for example, instructions and data which cause or otherwise configure a general purpose computer, special purpose computer, or special purpose processing device to perform a certain function or group of functions. Portions of computer resources used can be accessible over a network. The computer executable instructions may be, for example, binaries, intermediate format instructions such as assembly language, firmware, or source code. Examples of computer-readable media that may be used to store instructions, information used, and/or information created during methods according to described examples include magnetic or optical disks, solid state memory devices, flash memory, USB devices provided with non-volatile memory, networked storage devices, and so on.

Devices implementing methods according to these disclosures can comprise hardware, firmware and/or software, and can take any of a variety of form factors. Typical examples of such form factors include servers, laptops, smart phones, small form factor personal computers, personal digital assistants, and so on. Functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are means for providing the functions described in these disclosures.

Although a variety of examples and other information was used to explain aspects within the scope of the appended claims, no limitation of the claims should be implied based on particular features or arrangements in such examples, as one of ordinary skill would be able to use these examples to derive a wide variety of implementations. Further and although some subject matter may have been described in language specific to examples of structural features and/or method steps, it is to be understood that the subject matter defined in the appended claims is not necessarily limited to these described features or acts. For example, such functionality can be distributed differently or performed in components other than those identified herein. Rather, the described features and steps are disclosed as examples of components of systems and methods within the scope of the appended claims.

The present technology can be further understood from the following aspects:
Aspect 1. A method comprising: intercepting a communication originating from an artificial intelligence tool; determining that the communication includes content addressed by a data loss prevention policy; creating an identifier for at least a portion of the communication; and storing the identifier for the at least the portion of the communication in a content tracking database.
Aspect 2. The method of Aspect 1, further comprising: analyzing a first portion of code to determine whether the first portion of code includes the at least the portion of the communication.
Aspect 3. The method of any of Aspects 1 to 2, wherein the analyzing the portion of the code occurs prior to checking the portion of the code into a source code database.
Aspect 4. The method of any of Aspects 1 to 3, further comprising: when it is determined that the first portion of code includes the at least the portion of the communication, preventing the first portion of code from being checked into the source code database.
Aspect 5. The method of any of Aspects 1 to 4, further comprising: analyzing a first portion of content on a network protected by the data loss prevention to determine whether the first portion of the content includes the at least the portion of the communication.
Aspect 6. The method of any of Aspects 1 to 5, wherein the identifier for the at least the at least the portion of the communication is a first hash value derived from at least the portion of the communication, the analyzing the first portion of content comprises: deriving a second hash value for the first portion of the content; comparing the first hash value and the second value; determining that the first portion of the content includes the at least the portion of the communication when the first hash value substantially matches the second hash value.
Aspect 7. The method of any of Aspects 1 to 6, wherein the identifier for the at least the at least the portion of the communication is a first embedding derived from at least the portion of the communication, the analyzing the first portion of the content comprises: deriving a second embedding for the first portion of the content; comparing the first embedding and the second embedding; determining that the first portion of the content includes the at least the portion of the communication when the similarity score between the first embedding and the second embedding is above a threshold.
Aspect 8. The method of any of Aspects 1 to 7, wherein the embedding function to create the first embedding and the second embedding is a natural language word embedding function.
Aspect 9. The method of any of Aspects 1 to 8, wherein the communication is an in-bound communication coming from an external artificial intelligence tool into a network protected by the data loss prevention policy.
Aspect 10. The method of any of Aspects 1 to 9, wherein the intercepting of the communication originating from the artificial intelligence tool in a data loss prevention policy proxy intercepting the communication coming from the artificial intelligence tool and going to the client device.
Aspect 11. The method of any of Aspects 1 to 10, wherein the artificial intelligence tool is a generative artificial intelligence tool.
Aspect 12. The method of any of Aspects 1 to 11, wherein the generative artificial intelligence tool is a generative large language model.
Aspect 13. A method for applying a data loss prevention policy to uses of an artificial intelligence tool comprising: intercepting a communication between a client device and an interface to an artificial intelligence tool; determining that the communication includes content addressed by the data loss prevention policy; and preventing transmission of the content addressed by the data loss prevention policy.
Aspect 14. The method of Aspect 13, wherein the data loss prevention policy defines patterns for data that are prohibited from being provided to the artificial intelligence tool.
Aspect 15. The method of any of Aspects 13 to 14, further comprising: translating at least one pattern from the data loss prevention policy into a first embedding; translating at least a portion of the communication between the client device and the interface to the artificial intelligence tool into a second embedding; comparing the first embedding to the second embedding to determine a similarity score between the first embedding and the second embedding; and determining that the at least a portion of the communication between the client device and the interface to the artificial intelligence tool is addressed by the data loss prevention policy when the similarity score between the first embedding and the second embedding is above a threshold.
Aspect 16. The method of any of Aspects 13 to 15, wherein the embedding is a natural language word embedding.
Aspect 17. The method of any of Aspects 13 to 16, wherein the intercepting of the communication between the client device and the interface to an artificial intelligence tool is performed by a data loss prevention policy proxy.
Aspect 18. The method of any of Aspects 13 to 17, wherein the artificial intelligence tool is a generative artificial intelligence tool.
Aspect 19. The method of any of Aspects 13 to 18, wherein the generative artificial intelligence tool is a generative large language model.
Aspect 20. The method of any of Aspects 13 to 19, wherein the communication is an input into a generative artificial intelligence tool, wherein the generative large language model is ChatGPT.
Aspect 21. The method of any of Aspects 13 to 20, wherein the patterns for the data that are prohibited from being provided to the artificial intelligence tool include chunks of source code, regular expressions (RegEx), etc.
Aspect 22. The method of any of Aspects 13 to 21, whereby the data loss prevention policy prevents submission of confidential content addressed by the data loss prevention policy from being submitted in an instruction or query to the artificial intelligence tool.

## Claims

1. A method comprising:
intercepting a communication originating from an artificial intelligence tool;
determining that the communication includes content addressed by a data loss prevention policy;
creating an identifier for at least a portion of the communication;
storing the identifier for the at least the portion of the communication in a content tracking database; and
analyzing a first portion of content on a network protected by the data loss prevention policy to determine whether the first portion of the content includes the identifier for the at least the portion of the communication.

2. The method of claim 1, wherein the first portion of content is a first portion of code.

3. The method of claim 1 or 2, wherein the analyzing the portion of the code occurs prior to checking the portion of the code into a source code database.

4. The method of claim 3, further comprising:
when it is determined that the first portion of code includes the at least the portion of the communication, preventing the first portion of code from being checked into the source code database.

5. The method of any of claims 1 to 4, wherein the identifier for the at least the at least the portion of the communication is a first hash value derived from at least the portion of the communication, the analyzing the first portion of content comprises:
deriving a second hash value for the first portion of the content;
comparing the first hash value and the second value; and
determining that the first portion of the content includes the at least the portion of the communication when the first hash value substantially matches the second hash value.

6. The method of any of claims 1 to 5, wherein the identifier for the at least the at least the portion of the communication is a first embedding derived from at least the portion of the communication, the analyzing the first portion of the content comprises:
deriving a second embedding for the first portion of the content;
comparing the first embedding and the second embedding; and
determining that the first portion of the content includes the at least the portion of the communication when a similarity score between the first embedding and the second embedding is above a threshold.

7. The method of any of claims 1 to 6, wherein the communication is an in-bound communication coming from an external artificial intelligence tool into a network protected by the data loss prevention policy.

8. A computing system comprising:
means for intercepting a communication originating from an artificial intelligence tool;
means for determining that the communication includes content addressed by a data loss prevention policy;
means for creating an identifier for at least a portion of the communication;
means for storing the identifier for the at least the portion of the communication in a content tracking database; and
means for analyzing a first portion of content on a network protected by the data loss prevention policy to determine whether the first portion of the content includes the identifier for at least the portion of the communication.

9. The computing system of claim 8, wherein the first portion of content is a first portion of code.

10. The computing system of claim 8 or 9, wherein the analyzing the portion of the code occurs prior to checking the portion of the code into a source code database.

11. The computing system of claim 10, wherein the instructions further configure the apparatus to:
when it is determined that the first portion of code includes the at least the portion of the communication, prevent the first portion of code from being checked into the source code database.

12. The computing system of any of claims 8 to 11, wherein the identifier for the at least the at least the portion of the communication is a first hash value derived from at least the portion of the communication, the analyzing the first portion of content comprises:
derive a second hash value for the first portion of the content;
compare the first hash value and the second value; and
determine that the first portion of the content includes the at least the portion of the communication when the first hash value substantially matches the second hash value.

13. The computing system of any of claims 8 to 12, wherein the identifier for the at least the at least the portion of the communication is a first embedding derived from at least the portion of the communication, the analyzing the first portion of the content comprises:
derive a second embedding for the first portion of the content;
compare the first embedding and the second embedding; and
determine that the first portion of the content includes the at least the portion of the communication when a similarity score between the first embedding and the second embedding is above a threshold.

14. The computing system of any of claims 8 to 13, wherein the communication is an in-bound communication coming from an external artificial intelligence tool into a network protected by the data loss prevention policy.

15. A computer program, computer program product non-transitory computer-readable storage medium or computer readable medium comprising instructions which, when executed by a computer, cause the computer to carry out the steps of the method of any of claims 1 to 7.
